# EUROPEAN PATENT APPLICATION

(11) **EP 4 674 502 A1**
(43) Date of publication of application: **07.01.2026**
(21) Application number: 24186104.6
(22) Date of filing: 02.07.2024
(51) Int. Cl.: B01D 35/147, B01D 35/153, C02F 1/00

(54) **VALVE ADAPTER FOR WATER TREATMENT SYSTEMS**

(71) Applicant: Formaster S.A., 25-818 Kielce (PL)
(72) Inventor: BURSZTEIN, Maciej, 25-818 Kielce (PL); FRANKOWICZ, Bogdan, 25-818 Kielce (PL); ZMIJEWSKI, Mateusz, 25-818 Kielce (PL)
(74) Representative: Heuking Kühn Lüer Wojtek PartGmbB

(57) **Abstract**

The invention relates to a valve adapter (1) for regulating a flow of filtered liquid (FL) caused by gravity out of an outlet opening (23) of a liquid reservoir (2) comprising a cylindrical body (11) with an axial hole along to its cylindrical axis (CA) being open to its first and second ends (11a, 11b), where the first end is intended to face towards a filter cartridge (4) and the second end to face towards a bottom (22) of the liquid reservoir, where the cylindrical body is suitably shaped to fit into a valve holder (21) and to enclose and hold a valve (3) inside the cylindrical body with a press fit, and an annular plate (12) connected to the cylindrical body around its open first end and projecting radially outwards beyond the cylindrical body, where the annular plate comprises an elastic material suitably shaped to apply an opening force (F2) vertical to the bottom of the liquid reservoir pulling the valve being in press fit to the cylindrical body away from the bottom of the liquid reservoir.

## Description

### Field of the invention

The present invention relates to a valve adapter for regulating a flow of liquid caused by gravity out of an outlet opening of a liquid reservoir, where the valve adapter is adapted to open a valve to provide a flow of treated and/or filtered liquid out of the liquid reservoir. The invention further relates to a liquid treatment system and to a liquid treatment kit comprising such valve adapter, to a method to receive treated and/or filtered liquid with a liquid treatment system applying such valve adapter and to the use of this valve adapter to provide a flow of fluid out of the liquid reservoir.

### Background of the invention

The purification of liquids is often carried out using equipment for filtering the liquids. This allows substances that are dissolved in the liquids or contaminate them to be reduced or removed. If desired, such systems can also be used to add additives to the liquid to be treated. A sieve or a filter cartridge can be used for filtration. Such strainers or cartridges become clogged over time and become less effective or unusable for cleaning liquids. It is therefore advantageous that such strainers or cartridges can be replaced with unused strainers or cartridges in the respective apparatus. Cartridges in particular make handling easier when replacing them.

Document WO 2016/120174 discloses a water purification system with filter cartridges and a valve below the cartridge to regulate the flow of liquid through the water purification system. Even in case of use of cartridges, which can be replaced easily, the lifetime of such a system also depends on the used other components. Here, the valve is mechanically opened and closed in a complicated manner. The valve has to be rotated to open and close, where a screw member has to be inserted from the top, where the linear motion has to be converted into a rotation of the valve. Such mechanical solution requires complicated components and may lack reliability due to wear and possible manufacturing tolerances.

It would be desirable to provide a valve mechanism suitable to open and close an outlet opening, which is simple, reliable and uses non-expensive components to be applied.

### Summary of the invention

An object of the invention is to provide a valve mechanism suitable to open and close an outlet opening, which is simple, reliable and uses non-expensive components to be applied.

The object is solved by a valve adapter for regulating a flow of treated and/or filtered liquid caused by gravity out of an outlet opening of a liquid reservoir, where a valve is arranged in a valve holder at a bottom of the liquid reservoir to open and close the outlet opening and where a cartridge is arranged on top of the valve as a unit to treat and/or filter the non-treated and/or non-filtered liquid before leaving the liquid reservoir, where the valve adapter is adapted to fit onto the valve between the cartridge and the valve to close or open the valve depending on a desired valve status, wherein the valve adapter comprises:
- a cylindrical body with an axial hole along to its cylindrical axis being open to its first and second ends, where the first end is intended to face towards the cartridge and the second end to face towards the bottom of the liquid reservoir, where the cylindrical body is suitably shaped to fit into the valve holder and to enclose and hold the valve inside the cylindrical body with a press fit, and
- an annular plate connected to the cylindrical body around its open first end and projecting radially outwards beyond the cylindrical body, where the annular plate comprises an elastic material suitably shaped to apply an opening force vertical to the bottom of the liquid reservoir pulling the valve being in press fit to the cylindrical body away from the bottom of the liquid reservoir.

The term "liquid" denotes any kind of substance in the liquid state that can be purified or freed from undesirable substances at least to a certain extent by means of filtration. As an example, liquid may denote substances, which can be consumed by human beings or animals, such as water, beverages, or other liquid substances. The term "liquid" may also denote chemical substances and liquids that are not suitable for human consumption but can still be purified by filtration. The type of filter materials to be applied depends on the liquid substances to be filtered and therefore depend on the application of the invention. The treatment of liquid denotes any modification of the original liquid, where e.g. substances of the water might be changed chemically or e.g. might be added to the original water. Filtering of the liquid denotes the procedure, where a liquid penetrates pores of or passages through a filtering material in order to extract and hold back certain substances of the liquid in the filter material. The liquid reservoir into which the liquid to be filtered / treated is filled can be of any suitable shape and made of any suitable material.

In the present invention the term "valve" denotes the component, which is intended to close or open an outlet opening of the liquid reservoir. This component "valve" might be controlled and/or actuated by additional components interacting with the valve to establish a valve apparatus. In the present invention, the valve adapter is such a component interacting with the valve. The term "valve holder" denotes a part of the liquid reservoir in which the valve is arranged and held, while the valve can be moved freely at least in vertical direction from the bottom of the liquid reservoir inside the valve holder The valve adapter is adapted to regulate a flow of treated and/or filtered liquid through the outlet opening where the flow is due to the water's own weight (gravity), without any pumps being used or additional pressures acting on the water. The valve may have any shape as long as there is enough space between the valve and the valve holder sufficient to arrange the valve adapter onto the valve between valve and the valve holder.

The cartridge as a unit to treat and/or filter the non-treated and/or non-filtered liquid before leaving the liquid reservoir can be of any suitable shape if fitting into the liquid reservoir. The cartridge can be any kind of cartridge as long as the cartridge is suitable for filtering the liquid or treating the liquid is a desired way.

The press fit refers to a sufficiently firm connection between the valve and the valve adapter to enable the valve to be lifted safely without it slipping out of the press fit established e.g. by friction force between valve adapter and valve. The holding strength of the press fit can be influenced by the adjustment of the diameter of the cylindrical body to the valve dimensions, by the choice of material and its elasticity of the cylindrical body and by the roughness of the inside of the cylindrical body. The elasticity of the cylindrical body should be sufficient to allow the cylindrical body to be pushed over the valve while stretching the cylindrical body having a given shape and structure. The cylindrical body defines a cylindrical axis through the cylindrical body along its axial hole.

The annular plate denotes a solid body with a radial extension from the cylindrical axis may have any suitable diameter in radial direction from the cylindrical axis suitable to carry the elastic material of the annular plate, which shall apply an opening force vertical to the bottom of the liquid reservoir pulling the valve being in press fit to the cylindrical body away from the bottom of the liquid reservoir. The elastic material may be shaped in any suitable way to apply this force, for instance applying this force to the valve holder enclosing the valve resulting in a movement of the valve adapter and therefore also the valve away from the bottom of the liquid reservoir. The annular plate has a dimension in radial direction significantly larger than the thickness of the annular plate in axial direction (along the direction of the cylindrical axis of the cylindrical body).

The elastic material can be any material that is stretchable enough to allow the cylindrical body to be pushed over the valve while stretching the cylindrical body having a given shape.

Therefore, the valve adapter according to the present invention provides a mechanism for the valve suitable to open and close the outlet opening, which is simple, reliable and uses non-expensive components to be applied.

In an embodiment the annular plate comprises at least two prestressed elastic ribs as the elastic material that protrude in the direction to the bottom of the liquid reservoir from a second side of the annular plate facing towards the bottom of the liquid reservoir. The valve is hold by a valve holder around the valve at the bottom of the reservoir. The prestressed ribs apply a force to the top surface of the valve holder directed away from the bottom of the reservoir. The force applied by the prestressed elastic ribs is directed vertically to the bottom of the liquid reservoir pulling the valve being in press fit to the cylindrical body away from the bottom of the liquid reservoir. The term "prestressed" denotes that the elastic ribs remain in its shape and position in case of being in no contact to any external components like the valve holder. Furthermore, in case of being in contact to an external component, here the valve holder, the elastic material of the ribs intends to maintain the original position of the ribs due to its prestressed property resulting is pushing away the annular plate from the top surface of the valve holder. Since the cylindrical body is in a press fit with the valve, the valve is pulled away from the bottom of the reservoir into its open position by the prestressed ribs. The presence of the ribs provides an easy and reliable way to pull the valve to its open position.

In another embodiment the elastic ribs are arranged symmetrically around the cylindrical body. The symmetric arrangement of the ribs provides a force directed vertically to the bottom of the reservoir with larger precision and reliability preventing any tilting of the valve during pulling. A tilted valve may apply friction forces to the valve holder acting against the pulling and opening force applied by the valve holder. A tilted valve may even act against the press fit of the cylindrical body on the valve, which may result in a losing the press fit, which should be avoided.

In another embodiment the elastic ribs provide the opening force onto an upper surface of the valve holder of the liquid reservoir. The upper surface of the valve holder is directed towards the annular plate, in particular to the elastic ribs protruding from the annular plate. The valve holder holds the valve inside of the valve holder. Since the valve holder has a fixed connection to the bottom of the reservoir, any force action onto the valve holder will pull away the valve from the bottom reservoir resulting in the open position of the valve. Since the dimensions of the valve holder of the reservoir are known in beforehand the elastic ribs are able to provide a vertical force to the top surface valve holder with defined magnitude. Therefore, applying the pulling force to the upper (top) surface of the valve holder, a precisely defined force is applied to the valve to hold it in its open position.

In another embodiment the annular plate comprises recesses which follow the contour of the elastic ribs so that the elastic ribs can be embedded in the recesses when a vertical force is applied to the annular plate. The prestress of the elastic ribs defines the magnitude of the pulling force for the valve being in a press fit to the cylindrical body of the valve adapter. The recesses in the annular plate enlarge the geometrical margin of use of the valve adapter to different valve holders (or other surface to which the vertical force is plied) having different distances between upper (top) surface of the valve holder and the bottom of the reservoir. As a result, the valve adapter fits to a variety of geometrical shapes of the bottom reservoir and the valve holders while still applying the required force to open the valve.

In another embodiment the annular plate comprises three elastic prestressed ribs arranged symmetrically around the cylindrical body. The number of three elastic ribs prevent tilting of the annular plate in case of applying the pulling force to a certain surface, e.g. the upper (top) surface of the valve holder. Three ribs are always connected to the underlaying surface, which would not be the case for four, five, ... elastic ribs of the annular plate.

In another embodiment the elastic ribs have a shape following the contour of the cylindrical body. Subsequently, the elastic ribs do not extend beyond the annular plate in radial direction from the cylindrical axis of the cylindrical body. The corresponding valve holder is a compact device, which outer radial dimensions are defined by the annular plate improving the ease of handling when pushing the valve adapter over the valve in order to achieve a press fit to the valve.

In another embodiment the valve adapter allows to close the valve in case of a closing force acting vertically onto the annular plate in direction to the bottom of the liquid reservoir, which compresses the elastic material, preferably the elastic ribs towards the annular plate, which subsequently presses the valve towards the bottom of the liquid reservoir. Closure of the valve is possible due to the elastic material of the ribs, which can be bend into the closing position in case of a vertical force acting on top of the annular plate sufficiently larger than the elastic force applied by the elastic ribs. In case of the annular plate having recesses in the shape of the elastic ribs, these recesses can enclose the ribs enabling pressing the valve adapter downwards until the lower side of the annular plate is in contact to a counter surface, e.g. the upper (top) surface of the valve holder.

In another embodiment the cylindrical body comprises slots parallel to its cylindrical axis, which divide the cylindrical body into sub-bodies that are elastically movable against each other at least in the area of the slots. The slots provide additional geometrical margin to push the same cylindrical body onto valves having slightly different radial dimensions. The slots enable the material of the cylindrical body to expand to a certain extend in case of large valves in radial direction. Therefore, the slots widen the applicability of the same valve adapter to valves having slightly different dimensions.

In another embodiment the slots extend from the second end of the cylindrical body towards the first end without reaching the first end. The remaining area of the cylindrical body without slots improves the mechanical robustness of the valve adapter.

In another embodiment the slots end on the same height level relative to the cylindrical axis, where the elastic ribs have its maximum distance to the second side (side towards the bottom of the reservoir) of the annular plate. Slots ending on the same height level provide a symmetrical press fit to the valve independently from the area of the valve adapter. The ending position of the slots at the position of the ribs in its original shape without external force provide a stable and robust area of the cylindrical body not being inserted into the valve holder. This robust upper area of the cylindrical body helps to apply a predefined vertical force by the elastic ribs, since deformation of the cylindrical body and the annular plate are prevented or at least significantly reduced.

In another embodiment the valve adapter is a one-piece body. A one-piece body is easy to handle, is easy to be produced and provides defined properties not affected by additional parts to be connected. Therefore, the performance of the valve adapted is predictable with good precision and reliability.

In another embodiment the valve adapter is made of a plastic material, preferably is made of Polypropylene. Polypropylene is a relatively cheap material and provides the required flexibility of the elastic ribs. The use of plastic material allows to manufacture the valve adapter by simple, fast and reliable manufacturing technologies, e.g. molding.

In another embodiment the valve adapter is produced by injection molding or by an additive process, preferably by 3-dimensional printing. These manufacturing provide a good reproducibility (injection molding) or flexibility (3D-printing). Injection molding is a high-volume production method that can produce millions of parts per machine annually. Due to the high levels of automation and rapid manufacturing speed, injection molded parts are cheap parts. 3D-printing is a flexible production method in case of different products with lower production numbers.

The invention further relates to a liquid treatment system comprising a first liquid reservoir with an outlet opening to let out a flow of treated and/or filtered liquid caused by gravity, a valve arranged in a valve holder at a bottom of the first liquid reservoir to open and close the outlet opening, a cartridge arranged on top of the valve to treat and/or filter the non-treated and/or non-filtered liquid before leaving the first liquid reservoir, and a valve adapter according to the present invention adapted to fit onto the valve between the cartridge and the valve for regulating a flow of treated and/or filtered liquid caused by gravity out of the outlet opening by closing or opening the valve on demand depending on a desired valve status.

The liquid treatment system shall provide filtered or treated liquid, e.g. drinking water, to a user or to later processing step in a processing method of treating a liquid. The first liquid reservoir contains the liquid to be processed by the cartridge and may have any suitable shape as long as it is suitable to be integrated into the liquid treatment system. The cartridge is suitably shaped to fit into the first liquid reservoir above the valve in order to prevent non-filtered or non-treated liquid leaving the first reservoir through the valve. The fit seat of the cartridge is preferably tight enough to prevent any bypass flow of liquid along the outside of the cartridge. The first liquid reservoir might be made of any suitable material. In an embodiment, the first liquid reservoir is made of a transparent material to enable a user to inspect the liquid level inside the first liquid reservoir without any difficulties. The first liquid reservoir might be made of a plastic material, since plastics is cheap, provides a flexibility in manufacture, is a lightweight material and provides handling advantages.

The liquid treatment system according to the present invention provides a liquid treatment system, where a mechanism for the valve is present suitable to open and close the outlet opening, which is simple, reliable and uses non-expensive components to be applied.

In an embodiment the first liquid reservoir comprises a cartridge compartment which is arranged in such a way that it encloses the inserted cartridge in a liquid-tight manner and prevents non-treated and/or non-filtered liquid from flowing out of the outlet opening. The cartridge compartment is adapted in shape to the cartridge enabling a tight seat of the cartridge inside the cartridge compartment closing any possible bypass flow of liquid around the cartridge to only allow the fluid of the first liquid reservoir flowing through the cartridge. This maintains the desired filtering / treatment quality for the liquid.

In another embodiment the first liquid reservoir comprises a closing lid for closing the first reservoir at the top. The closing lid prevents liquid leaving the first liquid reservoir through the top of the first liquid reservoir even in case of moving the liquid treatment system from one location to another location. The closing lid might be made of the same material as the first liquid reservoir or might be made of a different material.

In another embodiment the closing lid comprises a closeable opening to refill non-treated and/or non-filtered liquid in to the first reservoir. Here, it is possible to refill the first liquid reservoir with further liquid to be processed without fully opening the liquid treatment system, which maintains avoiding unintended losses of liquid. The closing opening might be made of the same material as the closing lid or might be made of a different material.

In another embodiment the liquid treatment system further comprises a second liquid reservoir for collecting and storing treated and/or filtered liquid that has been filtered in the first liquid reservoir. The second liquid reservoir will collect all treated liquid passing the valve and prevents losses of filtered / treated liquid. The second liquid reservoir may have any suitable shape providing enough volume to collect of liquid inserted into the first liquid reservoir. The second liquid reservoir might be provided separately at a certain distance to the first liquid reservoir and the valve at the bottom of the first liquid reservoir or might by adapted to receive the first liquid reservoir. In an embodiment, the second liquid reservoir is made of a transparent material to enable a user to inspect the liquid level inside the second liquid reservoir without any difficulties. The second liquid reservoir might be made of a plastic material, since plastics is cheap, provides a flexibility in manufacture, is a lightweight material and provides handling advantages.

In another embodiment the second liquid reservoir is suitably shaped on its upper open side to receive the first liquid reservoir and hold it in a tight fit. The resulting liquid treatment system can be handled as one connected device reducing the risk of losing one or both types of liquid (filtered/treated and non-filtered/non-treated) and improving the ease of handling the treatment system by users.

In another embodiment first and second liquid reservoirs are suitably shaped, that the first reservoir closes the second reservoir in a liquid-tight manner preventing non-treated and/or non-filtered liquid from flowing into the second reservoir from the top. The adapted shapes provide a reliable use of the treatment system.

In another embodiment the second liquid reservoir comprises a pouring spout to transfer treated and/or filtered liquid into an external receptacle for liquids, where the pouring spout only has a liquid connection to the second reservoir. In this case the treatment system can be used as a table liquid reservoir directly providing processed liquid to the user. The shape of the pouring spout can be adapted to the particular use case.

The present invention further relates to a liquid treatment kit to establish a liquid treatment system according to in the present invention comprising:
- a first liquid reservoir with a valve holder at a bottom of the first liquid reservoir and an outlet opening to let out a flow of treated and/or filtered liquid caused by gravity out of the first liquid reservoir,
- a valve suitable to be inserted into the valve holder to open and close the outlet opening,
- a filter cartridge suitably shaped to enable arrangement on top of the valve to treat and/or filter the non-treated and/or non-filtered liquid before leaving the first liquid reservoir, and
- a valve adapter according to the present invention adapted to fit onto the valve between the cartridge and the valve for regulating the flow of treated and/or filtered liquid out of the outlet opening by closing or opening the valve on demand depending on a desired valve status.

The liquid treatment kit can be commercialized separately to a fully mounted liquid treatment system to provide the product in a compact way to the user, who will mount the components of the liquid treatment kit together to establish the liquid treatment system, e.g. at the location of use. The shape of the components of the liquid treatments kit might be adapted to each other to enable the user to build the treatment system without any additional parts of manufacturing skills.

The liquid treatment kit according to the present invention allows to provide a liquid treatment system, where a mechanism for the valve is present suitable to open and close the outlet opening, which is simple, reliable and uses non-expensive components to be applied.

In an embodiment the liquid treatment kit further comprises a second liquid reservoir for collecting and storing treated and/or filtered liquid that has been filtered in the first liquid reservoir. For the second liquid reservoir the same remarks as listed above will apply.

The present invention further relates to a method to receive treated and/or filtered liquid with a liquid treatment system according to the present invention comprising the steps of:
- providing a first liquid reservoir with an outlet opening at the bottom of the first liquid reservoir, where a valve is arranged in a valve holder at a bottom of the liquid reservoir to open and close the outlet opening;
- placing a valve adapter according to the present invention onto the valve;
- placing a cartridge as a unit for flow-through treatment and/or filtering for non-treated and/or non-liquids into the first reservoir on top of the valve adapter in a liquid-tight manner preventing non-treated and/or non-filtered liquid from flowing out of the outlet opening;
- filling non-treated and/or non-filtered-liquid to be filtered into the first liquid reservoir; and
- using a second liquid reservoir for collecting and storing treated and/or filtered liquid that has been treated and/or filtered by the cartridge and let out from the first liquid reservoir through the outlet opening of the first fluid reservoir.

The method according to the present invention allows to operate a liquid treatment system, where a mechanism for the valve is present suitable to open and close the outlet opening, which is simple, reliable and uses non-expensive components to be applied.

In another embodiment the method further comprises the step of pouring the treated and/or filtered liquid out of the second liquid reservoir into an external receptacle via a pouring spout of the second liquid reservoirs.

The present invention further relates to a use of a valve adapter according to the present invention in a liquid treatment system at least to provide a flow of filtered fluid out of a liquid reservoir comprising a cartridge as a unit for flow through treatment and/or filtering the non-treated and/or non-filtered liquid prior to leaving out the flow of treated and/or filtered liquid out of the reservoir.

In the present invention, the term "a" does not denote a specific number of the relevant components designated thereby, but rather explicitly includes the possibility that the claimed subject matter may comprise one or more of these components in addition to the one component. Thus, the term is also to be understood as "one or more". If, on the other hand, the number of specified components is meant to be equal to 1, this is denoted by "exactly one".

The embodiments described above can be combined with one another as desired by the person skilled in the art within the scope of the teaching according to the invention, also in deviation from the claim back references.

### Brief description of the drawings

- Fig.1:: an embodiment of the valve adapter according to the present invention in (a) a perspective view, and (b) a side view;
- Fig.2:: an embodiment of the liquid treatment system according to the present invention (a) in a side view, and (b) in an enlarged section view on top of the bottom (on the inner side) of the first reservoir of the liquid treatment system;
- Fig.3:: an embodiment of the cartridge with integrated valve adapter according to the present invention;
- Fig.4:: an embodiment of the liquid treatment kit according to the present invention; and
- Fig.5:: an embodiment of the method to receive treated and/or filtered liquid according to the present invention.

### Detailed description of Embodiments

The embodiments shown here are only examples to illustrate of the invention and should not limit the invention to these embodiments. Alternative embodiments for the present invention considered by people skilled in the art are also covered by the scope of protection of the present invention.

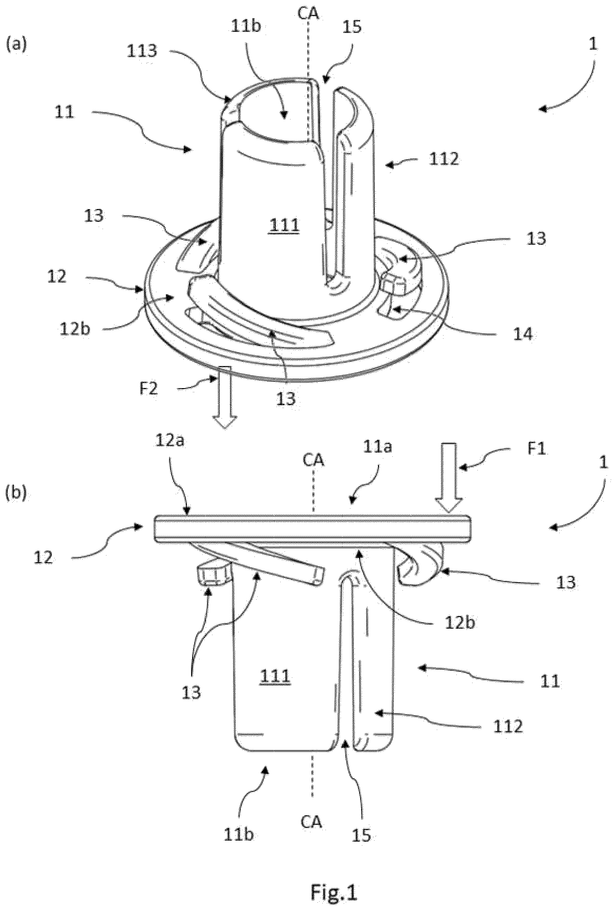

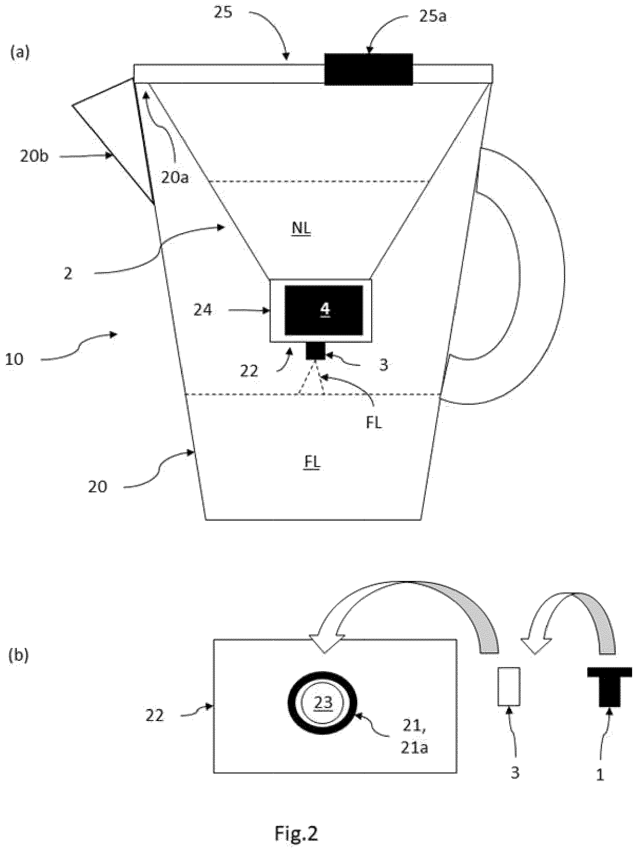

Fig.1 shows an embodiment of the valve adapter 1 according to the present invention in (a) a perspective view, and (b) a side view. The valve adapter 1 is intended for regulating a flow of treated and/or filtered liquid FL caused by gravity out of an outlet opening 23 of a liquid reservoir 2, where a valve 3 is arranged in a valve holder 21 at a bottom 22 of the liquid reservoir 2 to open and close the outlet opening 23 and where a cartridge 4 is arranged on top of the valve 3 as a unit to treat and/or filter the non-treated and/or non-filtered liquid NL before leaving the liquid reservoir 2 (see also fig. 2). The valve adapter 1 is adapted to fit onto the valve 3 between the cartridge 4 and the valve 3 to close or open the valve 3 depending on a desired valve status and comprises a cylindrical body 11 with an axial hole along to its cylindrical axis CA being open to its first and second ends 11a, 11b, where the first end 11a is intended to face towards the cartridge 4 and the second end 11b to face towards the bottom 22 of the liquid reservoir 2, where the cylindrical body 11 is suitably shaped to fit into the valve holder 21 and to enclose and hold the valve 3 inside the cylindrical body 11 with a press fit, and an annular plate 12 connected to the cylindrical body 11 around its open first end 11a and projecting radially outwards beyond the cylindrical body 11, where the annular plate 12 comprises an elastic material suitably shaped to apply an opening force F2 vertical to the bottom of the liquid reservoir 2 pulling the valve 3 being in press fit to the cylindrical body 11 away from the bottom 22 of the liquid reservoir 2. The annular plate 12 comprises three prestressed elastic ribs 13 arranged symmetrically around the cylindrical body as the elastic material that protrude in the direction to the bottom 22 of the liquid reservoir 2 from a second side 12b of the annular plate 12 intended facing towards the bottom 22 of the liquid reservoir 2. The elastic ribs 13 are arranged symmetrically around the cylindrical body 11. The elastic ribs 13 are arranged to provide the opening force F2 onto an upper surface of the valve holder 21 of the liquid reservoir 2 lifting the valve adapter 1 in direction of arrow indicated by F2. The annular plate 12 comprises three recesses 14 which individually follow the contour of the three separate elastic ribs 13 so that the elastic ribs 13 can be embedded (recessed) in the recesses 14 when a vertical force F1 is applied to the annular plate 12. The elastic ribs 13 have a shape following the contour of the cylindrical body 11. The valve adapter 1 allows to close the valve 3 in case of a closing force F1 acting vertically onto the annular plate 12 in direction to the bottom 22 of the liquid reservoir 2, which compresses the elastic material, preferably the elastic ribs towards the annular plate 12, which subsequently presses the valve 3 towards the bottom 22 of the liquid reservoir 2. The cylindrical body 11 comprises three slots 15 parallel to its cylindrical axis CA, which divide the cylindrical body 11 into three sub-bodies 111, 112, 113 that are elastically movable against each other at least in the area of the cylindrical body 11 comprising the slots 15. The slots 15 extend from the second end 11b of the cylindrical body 11 towards the first end 11a without reaching the first end 11a. Here, the slots 15 end on the same height level relative to the cylindrical axis CA, where the elastic ribs 13 have its maximum distance to the second side 12b of the annular plate 12. Here, the valve adapter 1 is a one-piece body, which is made of a plastic material, preferably is made of Polypropylene. The valve adapter 1 might be produced by injection molding or by an additive process, preferably by 3-dimensional printing. As an example, the valve adapter might have a length of 14.1 mm in direction of the cylindrical axis, an inner diameter of the cylindrical body of 7.5 mm, an outer diameter of the cylindrical body of 9.5 mm, the annular plate might have a diameter in radial direction from the cylindrical axis of 19 mm and a thickness of 1.6 mm, the slots might have a length of 10.5 mm. The elastic ribs may have a width of 1.85 mm perpendicular to the cylindrical axis and a comparable height parallel to the cylindrical axis. For other embodiments some of the dimensions above or all listed dimensions might be different.

Fig.2 shows an embodiment of the liquid treatment system 10 according to the present invention (a) in a side view, and (b) in an enlarged section view on top of the bottom 22 (on the inner side) of the first reservoir 2 of the liquid treatment system 10. The liquid treatment system 10 comprises a first liquid reservoir 2 with an outlet opening 23 to let out a flow of treated and/or filtered liquid FL caused by gravity, a valve 3 arranged in a valve holder 21 at a bottom 22 of the first liquid reservoir 2 to open and close the outlet opening, a cartridge 4 arranged on top of the valve 3 to treat and/or filter the non-treated and/or non-filtered liquid NL before leaving the first liquid reservoir 2, and a valve adapter 1 according to the present invention adapted to fit onto the valve 3 between the cartridge 4 and the valve 3 for regulating a flow of treated and/or filtered liquid FL caused by gravity out of the outlet opening 23 by closing or opening the valve 3 on demand depending on a desired valve status. Here, the first liquid reservoir 2 comprises a cartridge compartment 24 which is arranged in such a way that it encloses the inserted cartridge 4 in a liquid-tight manner and prevents non-treated and/or non-filtered liquid NL from flowing out of the outlet opening 23. Here, the first liquid reservoir 2 comprises a closing lid 25 for closing the first reservoir 2 at the top. Here, the closing lid 25 comprises a closeable opening 25a to refill non-treated and/or non-filtered liquid NL in to the first reservoir 2. The liquid treatment system 10 further comprises a second liquid reservoir 20 for collecting and storing treated and/or filtered liquid FL that has been filtered in the first liquid reservoir 2, where the second liquid reservoir 20 is suitably shaped on its upper open side 20a to receive the first liquid reservoir 2 and hold it in a tight fit. Furthermore, first and second liquid reservoirs 2, 20 are suitably shaped, that the first reservoir 2 closes the second reservoir 20 in a liquid-tight manner preventing non-treated and/or non-filtered liquid NL from flowing into the second reservoir 20 from the top. The second liquid reservoir 20 comprises a pouring spout 20b to transfer treated and/or filtered liquid FL into an external receptacle 30 for liquids FL, where the pouring spout 20b only has a liquid connection to the second reservoir 20. Fig.2a shows the valve adapter 1 being arranged onto the valve 3. Here, the valve 3 is shown outside the valve holder 21 for ease of understanding of pressing the valve adapter 1 onto the valve 3. However, the valve 3 might be already present inside the valve holder 21, where the valve adapter 1 is arranged onto the valve 3.

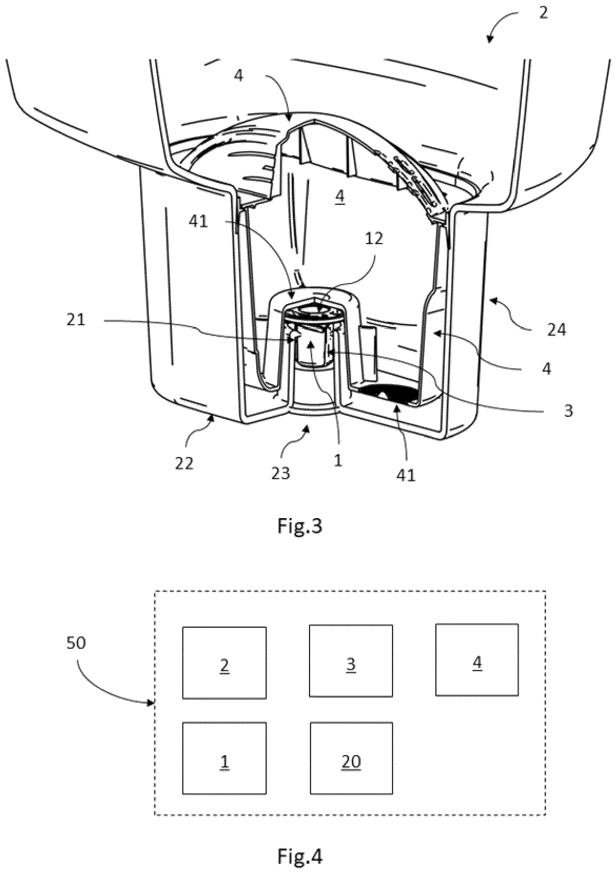

Fig.3 shows an embodiment of the first liquid reservoir 2 with inserted cartridge 4 with the valve adapter 1 according to the present invention being arranged below the cartridge 4. The cartridge 4 may comprise a cartridge recess 42 at the bottom of the cartridge 4 adapted to contactless house the valve adapter 1 attached on top of the valve 3 not to apply a downwards directed force to the valve adapter 1 preventing the valve opening functionality of the valve 1 adapter. For further details see also fig.2.

Fig.4 shows an embodiment of the liquid treatment kit 50 according to the present invention to enable a user to establish a liquid treatment system 10 according to the present invention comprising a first liquid reservoir 2 with a valve holder 21 at a bottom 22 of the first liquid reservoir 2 and an outlet opening 23 to let out a flow of treated and/or filtered liquid FL caused by gravity out of the first liquid reservoir 2, a valve 3 suitable to be inserted into the valve holder 21 to open and close the outlet opening 23, a filter cartridge 4 suitably shaped to enable arrangement on top of the valve 3 to treat and/or filter the non-treated and/or non-filtered liquid NL before leaving the first liquid reservoir 2, a valve adapter 1 according to the present invention adapted to fit onto the valve 3 between the cartridge 4 and the valve 3 for regulating the flow of treated and/or filtered liquid FL out of the outlet opening 23 by closing or opening the valve 3 on demand depending on a desired valve status, and further a second liquid reservoir 20 for collecting and storing treated and/or filtered liquid FL that has been filtered in the first liquid reservoir 2.

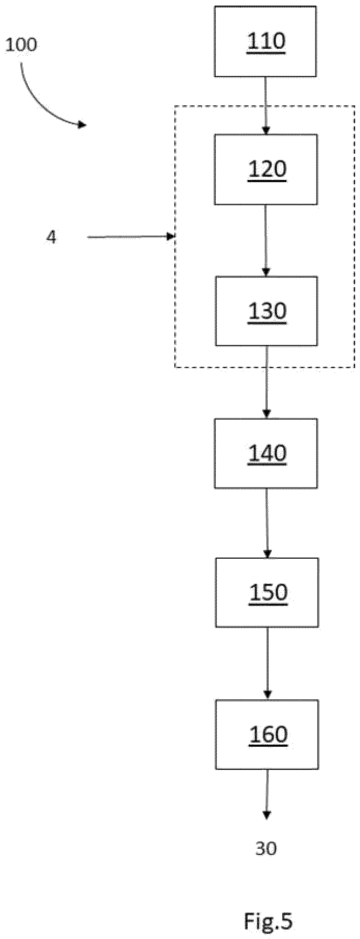

Fig.5 shows an embodiment of the method 100 according to the present invention to receive treated and/or filtered liquid FL with a liquid treatment system 10 according to the present invention comprising the steps of providing 110 a first liquid reservoir 2 with an outlet opening 23 at the bottom 22 of the first liquid reservoir 2, where a valve 3 is arranged in a valve holder 21 at a bottom 22 of the liquid reservoir 2 to open and close the outlet opening 23; placing 120 a valve adapter 1 according to the present invention onto the valve 3; placing 130 a cartridge 4 as a unit for flow-through treatment and/or filtering for non-treated and/or non-liquids NL into the first reservoir 2 on top of the valve adapter 1 in a liquid-tight manner preventing non-treated and/or non-filtered liquid NL from flowing out of the outlet opening 23; filling 140 non-treated and/or non-filtered-liquid NL to be filtered into the first liquid reservoir 2; using 150 a second liquid reservoir 20 for collecting and storing treated and/or filtered liquid FL that has been treated and/or filtered by the cartridge 4 and let out from the first liquid reservoir 2 through the outlet opening 23 of the first fluid reservoir 2 and optionally pouring 160 the treated and/or filtered liquid FL out of the second liquid reservoir into an external receptacle 30 via a pouring spout 20b of the second liquid reservoirs 20. The method 100 enables the use of the valve adapter 1 in a liquid treatment system 10 at least to provide a flow of filtered fluid FL out of a liquid reservoir 2 comprising a cartridge 4 as a unit for flow through treatment and/or filtering the non-treated and/or non-filtered liquid NL prior to leaving out the flow of treated and/or filtered liquid FL out of the reservoir 2.

### List of numerals

- 1: valve adapter according to the present invention
- 11: cylindrical body of the valve adapter
- 11a: first end of the cylindrical body
- 11b: second end of the cylindrical body
- 111: sub-body of the cylindrical body
- 112: sub-body of the cylindrical body
- 113: sub-body of the cylindrical body
- 12: annular plate of the valve adapter
- 12a: first side of the annular plate
- 12b: second side of the annular plate
- 13: prestressed elastic ribs
- 14: recess in the annular plate
- 15: slot within the cylindrical body
- 2: (first) liquid reservoir
- 21: valve holder
- 21a: upper surface of the valve holder
- 22: bottom of the reservoir
- 23: outlet opening
- 24: cartridge compartment
- 25: Closing lid
- 25a: closeable opening
- 3: valve
- 4: cartridge
- 41: lower side of the cartridge
- 42: cartridge recess
- 10: liquid treatment system according to the present invention
- 20: second liquid reservoir
- 20a: upper open side of the second liquid reservoir
- 20b: pouring spout
- 30: external receptacle
- 50: liquid treatment kit according to the present invention
- 100: method according to the present invention to receive treated and/or filtered liquid
- 110: providing a first liquid reservoir
- 120: placing a valve adapter according to the present invention onto the valve
- 130: placing a cartridge as a flow-through filter for liquids into the first reservoir on top of the valve adapter
- 140: filling liquid to be filtered into the first liquid reservoir
- 150: using a second liquid reservoir for collecting and storing treated and/or filtered liquid that has been treated and/or filtered by the cartridge
- 160: pouring the treated and/or filtered liquid out of the second liquid reservoir into an external receptacle
- CA: cylindrical axis of the cylindrical body
- F1: closing force to close the valve
- F2: opening force to open the valve
- FL: treated and/or filtered liquid
- NL: non-treated and/or non-filtered liquid

## Claims

1. A valve adapter (1) for regulating a flow of treated and/or filtered liquid (FL) caused by gravity out of an outlet opening (23) of a liquid reservoir (2), where a valve (3) is arranged in a valve holder (21) at a bottom (22) of the liquid reservoir (2) to open and close the outlet opening (23) and where a cartridge (4) is arranged on top of the valve (3) as a unit to treat and/or filter the non-treated and/or non-filtered liquid (NL) before leaving the liquid reservoir (2), where the valve adapter (1) is adapted to fit onto the valve (3) between the cartridge (4) and the valve (3) to close or open the valve (3) depending on a desired valve status, wherein the valve adapter (1) comprises:
- a cylindrical body (11) with an axial hole along to its cylindrical axis (CA) being open to its first and second ends (11a, 11b), where the first end (11a) is intended to face towards the cartridge (4) and the second end (11b) to face towards the bottom (22) of the liquid reservoir (2), where the cylindrical body (11) is suitably shaped to fit into the valve holder (21) and to enclose and hold the valve (3) inside the cylindrical body (11) with a press fit, and
- an annular plate (12) connected to the cylindrical body (11) around its open first end (11a) and projecting radially outwards beyond the cylindrical body (11), where the annular plate (12) comprises an elastic material suitably shaped to apply an opening force (F2) vertical to the bottom of the liquid reservoir (2) pulling the valve (3) being in press fit to the cylindrical body (11) away from the bottom (22) of the liquid reservoir (2).

2. The valve adapter (1) according to claim 1, wherein the annular plate (12) comprises at least two prestressed elastic ribs (13) as the elastic material that protrude in the direction to the bottom (22) of the liquid reservoir (2) from a second side (12b) of the annular plate (12) facing towards the bottom (22) of the liquid reservoir (2), preferably the elastic ribs (13) are arranged symmetrically around the cylindrical body (11).

3. The valve adapter (1) according to claim 2, wherein the elastic ribs (13) provide the opening force (F2) onto an upper surface of the valve holder (21) of the liquid reservoir (2).

4. The valve adapter (1) according to any one of claim 2 or 3, wherein the annular plate (12) comprises recesses (14) which follow the contour of the elastic ribs (13) so that the elastic ribs (13) can be embedded in the recesses (14) when
a vertical force (F1) is applied to the annular plate (12). and/or
the annular plate (12) comprises three elastic prestressed ribs (13) arranged symmetrically around the cylindrical body (11).
and/or
the elastic ribs (13) have a shape following the contour of the cylindrical body (11).

5. The valve adapter (1) according to any one of the preceding claims, wherein the valve adapter (1) allows to close the valve (3) in case of a closing force (F1) acting vertically onto the annular plate (12) in direction to the bottom (22) of the liquid reservoir (2), which compresses the elastic material, preferably the elastic ribs towards the annular plate (12), which subsequently presses the valve (3) towards the bottom (22) of the liquid reservoir (2).

6. The valve adapter (1) according to any one of the preceding claims, wherein the cylindrical body (11) comprises slots (15) parallel to its cylindrical axis (CA), which divide the cylindrical body (11) into sub-bodies (111, 112, 113) that are elastically movable against each other at least in the area of the slots (15), preferably the slots (15) extend from the second end (11b) of the cylindrical body (11) towards the first end (11a) without reaching the first end (11a), more preferably the slots (15) end on the same height level relative to the cylindrical axis (CA), where the elastic ribs (13) have its maximum distance to the second side (12b) of the annular plate (12).

7. The valve adapter (1) according to any one of the preceding claims, wherein
the valve adapter (1) is a one-piece body. and/or
the valve adapter (1) is made of a plastic material, preferably is made of Polypropylene.
and/or
the valve adapter (1) is produced by injection molding or by an additive process, preferably by 3-dimensional printing.

8. A liquid treatment system (10) comprising a first liquid reservoir (2) with an outlet opening (23) to let out a flow of treated and/or filtered liquid (FL) caused by gravity, a valve (3) arranged in a valve holder (21) at a bottom (22) of the first liquid reservoir (2) to open and close the outlet opening, a cartridge (4) arranged on top of the valve (3) to treat and/or filter the non-treated and/or non-filtered liquid (NL) before leaving the first liquid reservoir (2), and a valve adapter (1) according to any of claims 1 to 7 adapted to fit onto the valve (3) between the cartridge (4) and the valve (3) for regulating a flow of treated and/or filtered liquid (FL) caused by gravity out of the outlet opening (23) by closing or opening the valve (3) on demand depending on a desired valve status.

9. The liquid treatment system (10) according to claim 8, wherein the first liquid reservoir (2) comprises a cartridge compartment (24) which is arranged in such a way that it encloses the inserted cartridge (4) in a liquid-tight manner and prevents non-treated and/or non-filtered liquid (NL) from flowing out of the outlet opening (23).

10. The liquid treatment system (10) according to claim 8 or 9, wherein the first liquid reservoir (2) comprises a closing lid (25) for closing the first reservoir (2) at the top, preferably the closing lid (25) comprises a closeable opening (25a) to refill non-treated and/or non-filtered liquid (NL) in to the first reservoir (2).

11. The liquid treatment system (10) according to any one of claims 8 to 10, further comprising a second liquid reservoir (20) for collecting and storing treated and/or filtered liquid (FL) that has been filtered in the first liquid reservoir (2), preferably the second liquid reservoir (20) is suitably shaped on its upper open side (20a) to receive the first liquid reservoir (2) and hold it in a tight fit.

12. The liquid treatment system (10) according to claim 11, where first and second liquid reservoirs (2, 20) are suitably shaped, that the first reservoir (2) closes the second reservoir (20) in a liquid-tight manner preventing non-treated and/or non-filtered liquid (NL) from flowing into the second reservoir (20) from the top, preferably the second liquid reservoir (20) comprises a pouring spout (20b) to transfer treated and/or filtered liquid (FL) into an external receptacle (30) for liquids (FL), where the pouring spout (20b) only has a liquid connection to the second reservoir (20).

13. A liquid treatment kit (50) to establish a liquid treatment system (10) as claimed in any one of claims 8 to 12 comprising
- a first liquid reservoir (2) with a valve holder (21) at a bottom (22) of the first liquid reservoir (2) and an outlet opening (23) to let out a flow of treated and/or filtered liquid (FL) caused by gravity out of the first liquid reservoir (2),
- a valve (3) suitable to be inserted into the valve holder (21) to open and close the outlet opening (23),
- a filter cartridge (4) suitably shaped to enable arrangement on top of the valve (3) to treat and/or filter the non-treated and/or non-filtered liquid (NL) before leaving the first liquid reservoir (2), and
- a valve adapter (1) according to any of claims 1 to 7 adapted to fit onto the valve (3) between the cartridge (4) and the valve (3) for regulating the flow of treated and/or filtered liquid (FL) out of the outlet opening (23) by closing or opening the valve (3) on demand depending on a desired valve status, preferably further comprising a second liquid reservoir (20) for collecting and storing treated and/or filtered liquid (FL) that has been filtered in the first liquid reservoir (2).

14. A method (100) to receive treated and/or filtered liquid (FL) with a liquid treatment system (10) according to any one of claims 8 to 12 comprising the steps of:
- providing (110) a first liquid reservoir (2) with an outlet opening (23) at the bottom (22) of the first liquid reservoir (2), where a valve (3) is arranged in a valve holder (21) at a bottom (22) of the liquid reservoir (2) to open and close the outlet opening (23);
- placing (120) a valve adapter (1) according to any one of claims 1 to 7 onto the valve (3);
- placing (130) a cartridge (4) as a unit for flow-through treatment and/or filtering for non-treated and/or non-liquids (NL) into the first reservoir (2) on top of the valve adapter (1) in a liquid-tight manner preventing non-treated and/or non-filtered liquid (NL) from flowing out of the outlet opening (23);
- filling (140) non-treated and/or non-filtered-liquid (NL) to be filtered into the first liquid reservoir (2); and
- using (150) a second liquid reservoir (20) for collecting and storing treated and/or filtered liquid (FL) that has been treated and/or filtered by the cartridge (4) and let out from the first liquid reservoir (2) through the outlet opening (23) of the first fluid reservoir (2), preferably further comprising the step of pouring (160) the treated and/or filtered liquid (FL) out of the second liquid reservoir into an external receptacle (30) via a pouring spout (20b) of the second liquid reservoirs (20).

15. A use of a valve adapter (1) according to any one of claims 1 to 7 in a liquid treatment system (10) at least to provide a flow of filtered fluid (FL) out of a liquid reservoir (2) comprising a cartridge (4) as a unit for flow through treatment and/or filtering the non-treated and/or non-filtered liquid (NL) prior to leaving out the flow of treated and/or filtered liquid (FL) out of the reservoir (2).
